Europäisches Patentamt

European Patent Office

Office européen des brevets

(19)

(11) Veröffentlichungsnummer: **0 229 334**
**B1**

# (12) EUROPÄISCHE PATENTSCHRIFT

(45) Veröffentlichungstag der Patentschrift:
**02.11.89**

(51) Int. Cl.⁴: **A01D 34/08, A01D 34/02**

(21) Anmeldenummer: **86117303.7**

(22) Anmeldetag: **12.12.86**

(54) Handgeführte, mobile Mähmaschine.

(30) Priorität: **20.12.85 DE 8535835 U**

(43) Veröffentlichungstag der Anmeldung:
**22.07.87 Patentblatt 87/30**

(45) Bekanntmachung des Hinweises auf die Patenterteilung:
**02.11.89 Patentblatt 89/44**

(84) Benannte Vertragsstaaten:
**CH DE IT LI**

(56) Entgegenhaltungen:
**DE-A- 1 632 816**
**DE-C- 2 818 541**

(73) Patentinhaber: **Hako-Werke GMBH & Co., Hamburger Strasse 209-239, D-2060 Bad Oldesloe 1(DE)**

(72) Erfinder: **Neuhoff, Manfred, Rögen 42, D-2060 Bad Oldesloe(DE)**
Erfinder: **Berg, Günther, Alt-Rensefeld 9, D-2407 Bad Schwartau(DE)**

(74) Vertreter: **UEXKÜLL & STOLBERG Patentanwälte, Beselerstrasse 4, D-2000 Hamburg 52(DE)**

ACTORUM AG

## Beschreibung

Die Erfindung betrifft eine handgeführte, mobile Mähmaschine mit einem Frontmähbalken mit wenigsten einem Schneidmesser, mit einem sich in Fahrtrichtung erstreckenden, an seinem Vorderende den Mähbalken aufweisenden Träger und mit einer mit dem Träger verbundenen Einrichtung zur Dämpfung der durch das Schneidmesser bedingten Vibrationen der Maschine, wobei der mähbalkenseitige Abschnitt des Trägers um eine stehende Achse gelenkig ist und wobei zu beiden Seiten der Achse wenigstens ein erstes, in Trägerlängsrichtung wirkendes Dämpfungselement vorgesehen ist.

Bei Mähmaschinen dieser Art entstehen durch die hin- und hergehende Bewegung des oder der Schneidmesser des Mähbalkens sehr starke Vibrationen der Maschinen, die gedämpft werden müssen, damit die Bedienungsperson der Maschine nicht den ungedämpften Schwingungen des Mähbalkens ausgesetzt ist und die Mäharbeit sorgfältig ausführen und hierzu die Maschine sicher handhaben kann. Eine bekannte Lösung zur Dämpfung der Vibrationen besteht darin, daß in den quergeteilten, den Frontmähbalken aufweisenden Träger eine Dämpfungseinrichtung eingegliedert ist, die mehrere Dämpfungselemente umfaßt, von denen jedes an seinen beiden Enden an Endplatten der Abschnitte des Trägers befestigt sind. Die beiden Endplatten sind zusätzlich über wenigstens ein Gelenk miteinander verbunden, derart, daß der mähbalkenseitige Trägerabschnitt zur Belastung der Dämpfungselemente um eine stehende Achse verschwenkbar ist.

Diese vorbekannte Dämpfungskonstruktion erlaubt eine Dämpfung der sie erreichenden, von dem oder den Schneidmessern ausgehenden Vibrationen, jedoch ist die erzielte Dämpfung noch nicht zufriedenstellend. Ein weiterer Nachteil besteht darin, daß die einzelnen Dämpfungselemente sowohl auf Druck als auch auf Zug beansprucht werden, obwohl die eigentliche Dämpfungsleistung im wesentlichen nur bei Druckbelastung erfolgt. Insbesondere bei Verwendung von Gummipuffern als Dämpfungselemente führt dies zu einer nicht ausreichenden Schwingungsreduzierung und unter Umständen zu einem vorzeitigen Verschleiß der Dämpfungselemente.

Die Aufgabe der Erfindung besteht darin, die Dampfung der durch das oder die Schneidmesser bedingten Vibrationen einer solchen Mähmaschine deutlich zu verbessern und einem vorzeitigen Veschleiß der Dämpfungselemente vorzubeugen.

Zur Lösung dieser Aufgabe wird eine Mähmaschine der eingangs erwähnten Art derart ausgestaltet, daß beiderseits der Trägerlängsache wenigstens ein zweites, in Längsrichtung des Trägers wirkendes Dämpfungselement angeordnet ist und daß die sich auf jeder Seite der Trägerlängsachse gegenüberliegenden ersten und zweiten Dämpfungselemente an einem Widerlager lose anliegen oder zu ihm Spiel aufweisen und so angeordnet sind, daß sie in Trägerlängsrichtung abwechselnd und entgegengesetzt druckbelastet sind.

Gemäß einer bevorsugten Ausführungsform sind mehrere sich in Trägerlängsrichtung fluchtend gegenüberliegende erste und zweite Dämpfungselemente vorgesehen, die an einem gemeinsamen Widerlager anliegen, das sich zwischen den ersten und zweiten Dämpfungselementen hindurcherstreckt und als plattenförmiges Bauteil ein Bestandteil des Trägers ist. Die zweiten Dämpfungselemente können an einem gemeinsamen Bauteil befestigt sein, das über Verbindungselemente mit der Halterung für die ersten Dämpfungselemente verbunden ist.

Diese Lösung gestattet eine kompakte Bauweise der Dämpfungseinrichtung mit erheblich verbesserter Dämpfungseigenschaft. Dies ist darauf zurückzuführen, daß samtliche, beiderseits der Trägerlängsachse befindlichen Dämpfungselemente nur noch auf Druck beansprucht werden, und zwar derart, daß, wenn auf der einen Trägerseite die ersten Dämpfungselemente druckbeansprucht werden, dann gleichzeitig auf der anderen Trägerseite die zweiten Dämpfungselemente druckbeansprucht werden, wobei alle übrigen Dämpfungselemente vollständig entlastet sind, und umgekehrt. Somit können die jeweils belasteten Dämpfungselemente ihre volle Dämpfungsleistung zur Verfügung stellen und sind außerdem gegen vorzeitiges Versagen geschützt, da sie wegen entfallender Zugebelastung keiner Wechselbelastung mehr unterworfen werden.

Die Erfindung wird nachstehend anhand eines in den anliegenden Zeichnungen dargestellten Ausführungsbeispieles näher erläutert.

Es zeigen:

Figur 1 eine Seitenansicht einer Mähmaschine,
Figur 2 eine Aufsicht auf die Einzelheit bei X in Figur 1,
Figur 3 einen Teilschnitt entlang der Linie III-III aus Figur 2.

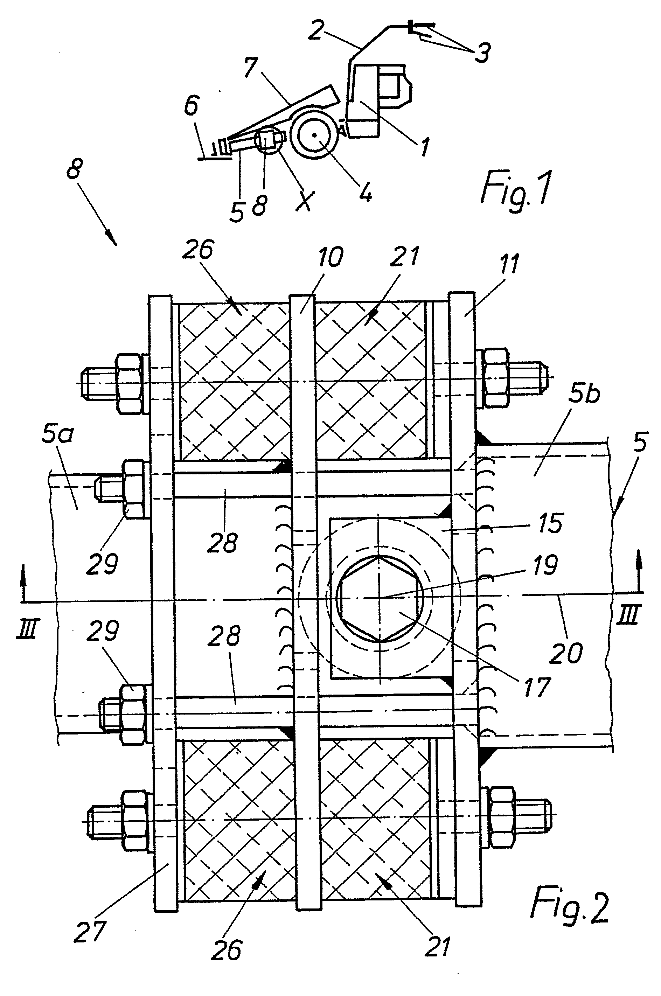

Der wesentliche Aufbau der Mähmaschine gemäß Figur 1 ist allgemein bekannt und besteht aus einer Antriebseinheit 1, zwei Führungsholmen 2 mit Bedienungselementen 3, einem Radsatz 4, einem sich in Fahrtrichtung erstreckende Träger 5, der an einem Ende die Antriebseinheit 1 und am anderen Ende einen Frontmähbalken 6 trägt, sowie einer Schutzabdeckung 7, die den Träger 5 und den wesentlichen Teil der Fahrgestellkonstruktion für den Radsatz abdeckt. Der sich quer und horizontal zum Träger 5 erstreckenden Frontmähbalken 6 weist im allgemeinen ein oder zwei Schneidmesser bekannten Aufbaus auf, von denen wenigstens eines hin- und hergehend antreibbar ist. In den Träger 5 ist eine Dämpfungseinrichtung 8 eingebaut (Figur 1). Die Dämpfungseinrichtung 8, die die von dem oder den Schneidmessern ausgehenden Vibrationen dämpft, kann auch an anderer Stelle mit dem Träger 5 verbunden sein, z.B. an dessen Endbereichen.

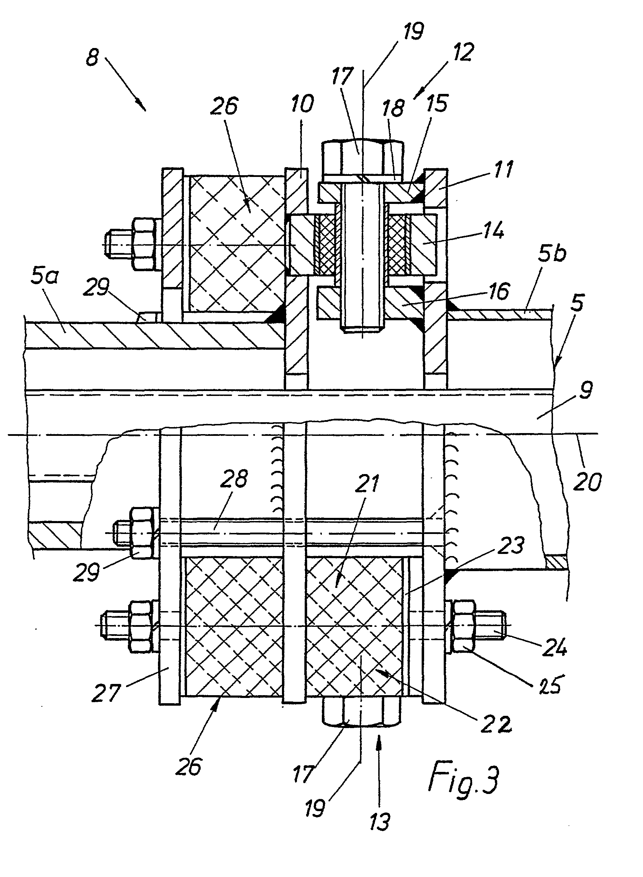

In den Figuren 2 und 3 ist die Dämpfungseinrichtung 8 im einzelnen dargestellt. Der hier quergeteilt ausgebildete Träger 5 besteht aus den beiden Abschnitten 5a und 5b aus Rohrteilen, innerhalb derer sich eine übliche Antriebswelle 9 für den Antrieb des Mähbalkens 6 dreht. Die Welle 9 wird von der Einheit 1 angetrieben, die üblicherweise auch den Radsatz 4 antreibt.

An den einander zugekehrten Enden der Trägerabschnitte 5a und 5b sind querverlaufende Endplatten 10 und 11 angeschweißt, die wiederum durch eine z.B. zwei Einzelgelenken 12, 13 aufweisende Gelenkanordnung miteinander verbunden sind. Die Einzelgelenke bestehen aus an den Endplatten 10 und 11 angeschweißten Lagerteilen 14, 15 und 16, die durch einen Gelenkbolzen 17, z.B. eine Kopfschraube, sowie ein äußere Metallbuchsen aufweisendes Elastomerlager gelenkig bzw. verschwenkbar miteinander verbunden sind, wobei die Kopfschraube durch einen Federring 18 gesichert ist. Die Gelenkbolzen 17 definieren eine stehende Achse 19, um die der mähbalkenseitige Trägerabschnitt 5a gelenkig ist.

Zwischen den Endplatten 10 und 11 ist auf jeder Seite der Längsachse 20 des Trägers 5 wenigstens ein erstes Dämpfungselement 21 vorgesehen. Bei dem hier gezeigten Ausführungsbeispiel sind zwei Dämpfungselemente 21 vorhanden. Die Elemente 21 sind in Richtung der Trägerlängsachse 20 belastbar, und zwar nur auf Druck. Dies ist dadurch erreicht, daß die Elemente 21 im Ruhezustand mit ihrem einen Ende an einem Widerlager lose anliegen, während sie an ihrem anderen Ende befestigt sind. Im vorliegenden Beispiel ist das Widerlager durch die Endplatte 10 des Trägerabschnittes 5a gebildet, während die andere Endplatte 11 als Befestigungsteil für die Dämpfungselemente 21 dient. Vorzugsweise bestehen die Dämpfungselemente 21 im wesentlichen je aus einem an sich bekannten Gummipuffer 22 der an einer Platte 23 mit einem Befestigungsbolzen 24 anvulkanisiert ist. Der Bolzen 24 ist mittels Mutter 25 an der Endplatte 11 festgeschraubt.

Ferner sind zweite Dämpfungselemente 26 vorgesehen, und zwar ebenfalls auf jeder Seite der Trägerlängsachse 20 mindestens je ein Element. Im vorliegenden Beispiel sind je zwei Elemente 26 gewählt, so daß jedem ersten Dämpfungs element 21 ein zweites Dämpfungselement 26 in einer zur Trägerlängsachse 20 parallelen Fluchtlinie gegenüberliegt. Der Aufbau dieser zweiten Dämpfungselemente 26 entspricht dem der ersten Dämpfungselemente 21. Die Montage und die Funktion sind insofern identisch, als daß ebenfalls ein Ende der Elemente 26 an einem Widerlager lose anliegt, das im Beispiel wiederum die Endplatte 10 ist, wodurch auch die Belastung der Elemente 26 nur auf Druck erfolgen kann.

Die zweiten Dämpfungselemente 26 werden von einem den Trägerabschnitt 5a im Abstand umgebenden Bauteil 27 getragen, das über mehrere Verbindungselemente 28 mit der Halterung für die ersten Dämpfungselemente 21 verbunden ist, die im vorliegenden Fall aus der Endplatte 11 des Trägerabschnittes 5b besteht.

Die Verbindungselemente 28 bestehend aus Schraubenbolzen, die an der Endplatte 11 z.,B. durch Schweißen befestigt sind, die Endplatte 10 mit Spiel durchdringen und sich auch durch das Bauteil 27 erstrecken. Eine äußere Mutter 29 auf jedem Verbindungselement 28 drückt gegen das Bauteil 27 und läßt dadurch die zweiten Dämpfungselemente 26 gegen die Endplatte 10 des mähbalkenseitigen Trägerabschnittes 5a anliegen. Mit den Muttern 29 ist es möglich, alle Dämpfungselemente 21, 26 so einzustellen, daß sie nur in ihrem Ruhezuzstand, das heißt bei nicht eingeschaltetem Mähbalken 6, an dem gemeinsamen Widerlager 10 lose anliegen. Wenn die Dämpfungseinrichtung 8 arbeitet, der vordere Trägerabschnitt 5a also um die stehende Achse 19 vibriert, heben sich die Dämpfungselemente 21, 26 bei nicht zu starker Einstellung der Muttern 29 abwechselnd und wechselseitig von dem Widerlager 10 ab, wie es ohne weiteres bei Betrachtung der Figur 2 klar wird. Die Größe dieses sich so ergebenden Spiels zwischen dem Widerlager 10 und den Dämpfungselementen 21, 26 kann mittels der Muttern eingestellt werden.

Bei dem erläuterten Ausführungsbeispiel vibriert das Widerlager 10 mit um die stehende Achse 19, da es an dem vibrierenden Trägerabschnitt 5a starr befestigt ist. Alternativ kann das Widerlager aber auch durch die Endplatte 11 oder durch einen entsprechenden Rahmenteil der Mähmaschine gebildet sein, wobei sich dann die zweiten Dämpfungselemente 26 und das Ringteil 27 mit Bezug auf Figur 2 rechts von der Endplatte 11 befinden würden. Ferner würde dann das Ringteil 27 vibrieren, da es in diesem Fall über die Verbindungselemente 28 von der Endplatte 10 getragen wird.

Alternativ müssen die Dämpfungselemente 21, 26 nicht unbedingt an dem Widerlager 10 anliegen, sondern können auch ein gewisses Spiel zu ihm aufweisen. Ferner können die Elemente 21, 26 statt aus Gummipuffer auch aus anderen Federelementen bestehen, z.B. aus einer oder einem Satz Wendelfedern aus Metall je Dämpfungselement.

## Patentansprüche

1. Handgeführte, mobile Mähmaschine mit einem Frontbalken (6) mit wenigstens einem Schneidmesser, mit einem sich in Fahrrichtung erstreckenden, an seinem Vorderende den Mähbalken (6) aufweisenden Träger (5) und mit einer mit dem Träger (5) verbundenen Einrichtung (8) zur Dämpfung der durch das Schneidmesser bedingten Vibrationen der Maschine, wobei der mähbalkenseitige Abschnitt des Trägers (5) um eine stehende Achse (19) gelenkig ist und wobei zu beiden Seiten der Achse (19) wenigstens ein erstes, in Trägerlängsrichtung wirkendes Dämpfungselement (21) vorgesehen ist, **dadurch gekennzeichnet**, daß beiderseits der Trägerlängsachse (20) wenigstens ein zweites, in Längsrichtung des Trägers (5) wirkendes Dämpfungselement (26) angeordnet ist und daß die sich auf jeder Seite der Trägerlängsachse (20) gegenüberliegenden ersten und zweiten Dämpfungselemente (21, 26) an einem Widerlager (10) lose anliegen oder zu ihm Spiel aufweisen und so angeordnet sind, daß sie in Trägerlängsrichtung abwechselnd und entgegengesetzt auf Druck belastbar sind.

2. Mähmaschine nach Anspruch 1, **dadurch gekennzeichnet**, daß mehrere, sich in Trägerlängsrichtung fluchtend gegenüberliegende erste und zweite Dämpfungselemente (21, 26) vorgesehen sind und daß das Widerlager (10) ein gemeinsames, sich zwischen den ersten und zweiten Dämpfungselementen (21; 26) hindurcherstreckendes Bauteil ist.

3. Mähmaschine nach Ansprüche 1 oder 2, **dadurch gekennzeichnet,** daß das Widerlager (10) ein plattenförmiges Bauteil und ein Bestandteil des Trägers (5a) oder des Rahmens oder dergleichen der Maschine ist.

4. Mähmaschine nach einem der Ansprüche 1 bis 3, **dadurch gekennzeichnet,** daß die zweiten Dämpfungselemente (26) an einem gemeinsamen Bauteil (27) befestigt sind und daß das Bauteil über Verbindungselemente (28, 29) mit der Halterung (11) für die ersten Dämpfungselemente (21) verbunden ist.

5. Mähmaschine nach Anspruch 4, **dadurch gekennzeichnet,** daß die Verbindungselemente aus an der Halterung (11) starr befestigten Schraubenbolzen (28) bestehen, die das Bauteil (27) durchgreifen und eine außen am Bauteil (27) angreifende Mutter (29) zur gleichzeitigen Einstellung des axialen Arbeitsspiels der ersten und zweiten Dämpfungselemente (21, 26) aufweisen.

6. Mähmaschine nach einem der Ansprüche 1 bis 5, **dadurch gekennzeichnet,** daß die ersten und zweiten Dämpfungselemente (21, 26) aus Gummipuffern oder anderen Federelementen bestehen.

## Claims

1. Hand-guided mobile mower having a front beam (6) with at least one cutter blade, with a support (5) which extends in the direction of movement and compromises the cutter plate (6) on its forward end and with a means (8) connected to the support (5) for damping the vibrations of the machine caused by the cutter blade, that section of the support (5) on the cutter beam side being pivotable about a verical shaft (19) and with which, at both sides of the shaft (19), at least a first damping element (21) acting longitudinally of the support is provided, characterised in that, on both sides of the longitudinal axis (20) of the support, a second damping element (26) acting longitudinally of the support (5) is provided, and that the first and second damping elements (21, 26) opposite one another on each side of the support longitudinal axis (20) bear loosely on an abutment (10) and have a clearance relatively thereto and are so arranged that, in the length direction of the support, they can be alternately and oppositely pressure-loaded.

2. Mower according to claim 1, characterised in that a plurality of first and second damping elements (21, 26) are provided in alignment facing one another in the lenght direction of the support and that the abutment (10) is a common component which extends between the first and second damping elements (21; 26).

3. Mower according to claim 1 or 2, characterised in that the abutment (10) is a plate-like structural part and a component of the support (5a) or of the frame or the like of the mower.

4. Mower according to one of the claims 1 to 3, charcaterised in that the second damping elements (26) are fixed on a common structural part (27) and that the structural part is connected by way of connecting elements (28, 29) to the mounting (11) for the first damping elements (21).

5. Mower according to claim 4, characterised in that the connection elements consist of screw bolts (28) rigidly fixed on the mounting (11), which boltsextend the structural part (27) and comprise a nut (29) acting externally on the structural part (27) for the simultaneous adjustment of the axial functioning action of the first and second damping elements (21, 26).

6. Mower according to one of the claims 1 to 5, characterised in that the first and second damping elements (21, 26) consist of rubber buffers or other spring elements.

**Revendications**

1. Moissonneuse mobile conduite à la main, avec une poutre antérieure (6) portant au moins un couteau, avec une poutre (5) s'étendant dans la direction de la progression, présentant la poutre (6) de la moissonneuse à son extrémité avant, et avec un dispositif (8) lié à la poutre (5) pour amortir les vibrations de la machine provoquées par le couteau, où le tronçon de la poutre (5) situé du côté de la poutre de la moissonneuse est articulé autour d'un axe dressé (19) et où, des deux côtés de l'axe (19), est prévu au moins un élément amortisseur (21) agissant dans la direction longitudinale de la poutre, caractérisée en ce que des deux côtés de l'axe longitudinal (20) de la poutre est disposé au moins un deuxième élément amortisseur (26) agissant en direction longitudinale de la poutre (5), et en ce que les éléments amortisseurs premiers et deuxièmes (21, 26) se faisant face de chaque côté de l'axe longitudinal (20) de la poutre s'appliquent librement à un appui (10) ou présentent un jeu par rapport à celui-ci et sont susceptibles d'être chargés à la pression alternativement et en sens opposés dans la direction longitudinale de la poutre.

2. Moissonneuse suivant la revendication 1, caractérisée en ce que sont prévus, alignés dans la direction longitudinale de la poutre, des éléments amortisseurs premiers et deuxièmes (21, 26) se faisant face et en ce que l'appui (10) est une partie constructive s'étendant entre les premiers et deuxièmes éléments amortisseurs (21, 26).

3. Moissonneuse suivant la revendication 1 ou 2, caractérisée en ce que l'appui (10) est une partie contructive en forme de plaque et un constituant de la poutre (5a) ou du bâti ou d'une partie analogue de la machine.

4. Moissonneuse suivant l'une des revendications 1 à 3, caractérisée en ce que les deuxièmes éléments amortisseurs (26) sont fixés à une partie constructive commune (27) et en ce que la partie constructive est reliée par des éléments de liaison (28, 29) à la monture (11) pour les premiers éléments amortisseurs (21).

5. Moissonneuse suivant la revendication 4, catactérisée en ce que les éléments de liaison consistent en boulons filetés (28) fixés de manière rigide à la monture (11), qui traversent la partie constructive (27) et qui présentent un écrou (29) s'appliquant extérieurement à la partie constructive (27) pour le ré-

4

glage simultané du jeu de travail axial des premiers et deuxièmes éléments amortisseurs (21, 26).

6. Moissonneuse suivant l'une des revendications 1 à 5, caractérisée en ce que les premiers et deuxièmes éléments amortisseurs (21, 26) sont constitués par des tampons de caoutchouc ou d'autres éléments élastiques.

Fig.1

Fig.2

EP 0 229 334 B1

Fig.3